# EUROPÄISCHE PATENTSCHRIFT

(11) **EP 4 283 846 B1**
(45) Veröffentlichungstag und Bekanntmachung des Hinweises auf die Patenterteilung: **26.02.2025**
(21) Anmeldenummer: 22211508.1
(22) Anmeldetag: 05.12.2022
(51) Int. Cl.: H02K 15/00, H02K 15/10, B65G 47/14

(54) **VERFAHREN, VORRICHTUNG UND VERWENDUNG ZUM VEREINZELN, AUSRICHTUNG UND EINSETZEN VON NUTDECKSCHIEBERN FÜR EINEN STATOR**
METHOD, DEVICE AND USE FOR SEPARATING, ALIGNING AND INSERTING SLOT COVER SLIDES FOR A STATOR
PROCÉDÉ, DISPOSITIF ET UTILISATION POUR SÉPARER, ALIGNER ET INSÉRER DES COULISSEAUS DE RECOUVREMENT D'ENCOCHES POUR UN STATOR

(30) Priorität: 27.05.2022 DE 102022001866
(43) Veröffentlichungstag der Anmeldung: 29.11.2023
(73) Patentinhaber: Grob-Werke GmbH & Co. KG, 87719 Mindelheim (DE)
(72) Erfinder: Ziegler, Manfred, 86856 Hiltenfingen (DE); Schmölz, Markus, 87668 Rieden (DE)
(74) Vertreter: KASTEL Patentanwälte PartG mbB

(56) Entgegenhaltungen:
- CN-U- 208 765 621
- DE-U1- 202011 109 506
- JP-A- S5 661 235
- JP-A- S58 198 140

## Beschreibung

Die Erfindung betrifft ein im Zuge der Herstellung eines Stators durchzuführendes Vereinzelungsverfahren zum Vereinzeln von Nutdeckschiebern zum Abdecken von mit Leitern zum Bilden einer Spulenwicklung versehenen Statornuten. Weiter betrifft die Erfindung ein im Zuge eines Herstellverfahren für einen Stator durchzuführendes Verfahren zum Einsetzen von Nutdeckschiebern in Statornuten zwecks Abdeckens darin befindlicher Leiter unter Einsatz eines solchen Vereinzelungsverfahrens. Weiter betrifft die Erfindung eine Vereinzelungsvorrichtung zum Durchführen des Vereinzelungsverfahrens sowie eine Verwendung einer derartigen Vereinzelungsvorrichtung bei der Herstellung von Statoren.

Aus den folgenden Literaturstellen sind Fördermittel bekannt, mit denen sich Teile vereinzeln lassen:
[1] DE 20 2011 109506 U1
[2] JP S56 61235 A

Die Literaturstelle [1] beschreibt hierzu eine Vorrichtung zum Vereinzeln von nicht näher spezifizierten Kleinteilen, die völlig ungeordnet in einem Behälter bereitgestellt werden, an dessen Boden ein Schieber mit Aufnahmen für die Kleinteile hin und her fährt. In den Aufnahmen nach außen beförderte Kleinteile werden mit einem Handlingssystem, das ein Saugrohr oder Greifer aufweisen kann, weiter befördert. Der Behälter weist einen Luftdruckanschluss auf, über den Druckluftstöße zum Auflockern der Kleinteile in dem Behälter eingebracht werden können.

Zum technologischen Hintergrund zu Nutdeckschiebern sowie Herstellverfahren zum Herstellen von Statoren unter Verwendung von Nutdeckschiebern wird auf folgende Literaturstellen verwiesen:
[3] DE102017101381A1
[4] DE102017002420A1
[5] DE102016111478B4
[6] DE102016124534B4
[7] DE102016113894A1
[8] DE102016111482B4
[9] DE102017119838A1
[10] JP S58 198140 A
[11] CN 208 765 621 U

Bei dem Stand der Technik nach [11] werden alle Nuten eines Stators gleichzeigit mit aus Eisen gebildeten Nutdeckschiebern versehen. Hierzu ist eine Vorrichtung zum gleichzeitigen Einschieben der Nutdeckschieber auf dem gesamten Umfang des Statorkerns offenbart. Die Vorrichtung weist einen Einführdorn auf, der mit Vorsprüngen in die Nuten eingreift, wobei die Nutdeckschieber an Magneten gehalten hinter den Vorsprüngen angeordnet sind und beim Einführen des Dorns in den Statorkern mittels einer Pressscheibe eingepresst werden.

Statoren von elektrischen Maschinen weisen in der Regel ein aus einem Blechpaket gebildetes Statorbauteil mit Statornuten auf, in denen Leiter von Spulen untergebracht sind. Die einzelnen mit Leiter versehenen Statornuten werden bei einigen Statoren jeweils mit einem Nutdeckschieber abgedeckt, die in die Statornuten eingesetzt werden. Die Nutdeckschieber sind leistenförmig ausgebildet, so dass sie mit ihrer größten Erstreckung in eine Längsrichtung erstrecken. Die Außenkontur und der Querschnitt der Nutdeckschieber sind entsprechend des Einsatzes an der Statornut ausgebildet, beispielsweise haben die Nutdeckschieber sich in Längsrichtung erstreckende Seitenflächen, von denen eine im bestimmungsgemäßen Gebrauch der Innenseite der Statornut zugewandt ist und die andere dem Rotor der elektrischen Maschine zugewandt ist.

Nutdeckschieber lassen sich aufgrund ihrer Gestaltung schwer handhaben, da sie eine stabförmige, schmale Geometrie, oft mit verrundeten Ecken, aufweisen. Zudem werden sie zumeist ohne Orientierung als Schüttgut bereitgestellt. Zum Fügen der Deckschieber wird eine sehr präzise Orientierung benötigt.

Bei derzeitigen in unterschiedlichen Herstellbetrieben eingesetzten praktischen Verfahren werden die Nutdeckschieber aufwändig von Hand aus einer Schüttgutbereitstellung (wie z.B. KLT-Behälter o.ä.) vereinzelt und in Magazinen lagerichtig eingesteckt. Dieser Ablauf, bei dem der Werker die Deckschieber einzeln aus z.B. einer Box entnimmt und in Magazine steckt, ist extrem zeitintensiv und erfordert (je nach Taktzeit) eine Vielzahl an Werkern. Die Nutdeckschieber können dann automatisiert weiterverarbeitet werden, indem die Magazine vor dem Blechpaket des Stators positioniert und die Deckschieber gefügt werden.

Die Erfindung hat sich zur Aufgabe gestellt, die Handhabung von Nutdeckschiebern im Zuge der Herstellung von Statoren wesentlich zu verbessern.

Zum Lösen dieser Aufgabe schafft die Erfindung ein Vereinzelungsverfahren nach Anspruch 1. Ein insbesondere automatisiertes Verfahren zum Einsetzen von Nutdeckschiebern, bei dem als Unterschritt ein solches Vereinzelungsverfahren durchgeführt wird, ist Gegenstand eines Nebenanspruchs. Eine Vereinzelungsvorrichtung zum Durchführen des Vereinzelungsverfahrens und eine Verwendung einer solchen Vereinzelungsvorrichtung bei der Herstellung von Statoren sind Gegenstand der weiteren Nebenansprüche.

Vorteilhafte Ausgestaltungen sind Gegenstand der Unteransprüche.

Die Erfindung schafft gemäß einem ersten Aspekt davon ein im Zuge der Herstellung eines Stators durchzuführendes Vereinzelungsverfahren zum Vereinzeln von Nutdeckschiebern zum Abdecken von mit Leitern zum Bilden einer Spulenwicklung versehenen Statornuten, umfassend die Schritte:
a) Bereitstellen einer Menge von leistenförmigen Nutdeckschiebern derart, dass die Nutdeckschieber zueinander in Längsrichtung ausgerichtet, ansonsten ungeordnet als Schüttgut vorliegen,
b) Bereitstellen eines Gegenstücks (=Vereinzelungswerkzeug), das eine nach oben weisende Oberfläche mit wenigstens einer an die Form der Nutdeckschieber komplementär angepassten nach oben offenen Nut, in der vorzugsweise ein Nutdeckschieber ausgerichtet aufnehmbar ist, aufweist,
c) Anordnen der Menge von Nutdeckschiebern parallel zu der wenigstens einen Nut;
d) relatives Bewegen der Menge Nutdeckschieber und des Gegenstücks in Richtung quer zu der Längserstreckung der Nut und der damit ausgerichteten Nutdeckschieber, so dass die Menge Nutdeckschieber über den mit der Nut versehenen Bereich der Oberfläche bewegt wird,
e) Einfügen eines Nutdeckschiebers in die Nut, um den Nutdeckschieber auch bezüglich seiner Winkellage um seine Längsmittelachse in der Nut auszurichten.

Es ist bevorzugt, dass die Schritte a) und c) durchgeführt werden mittels des Schritts:
a1) Einfügen einer Menge von leistenförmigen Nutdeckschiebern in eine längliche, zu der Längsrichtung der Nut ausgerichteten Aufnahme derart, dass die Nutdeckschieber darin in Längsrichtung ausgerichtet, ansonsten ungeordnet als Schüttgut vorliegen und über eine längliche Abgabeöffnung am unteren Ende der Aufnahme abgegeben werden können, und dass Schritt d) umfasst:
d1) relatives Bewegen der Aufnahme über das Gegenstück, so dass die Aufnahme mit der Abgabeöffnung und der mit der Nut versehene Bereich der Oberfläche relativ zueinander aneinander vorbei bewegt werden.

Es ist bevorzugt, dass Schritt e) unter Verwendung wenigstens eines Abstreifers durchgeführt wird, der in Bewegungsrichtung nach der Abgabeöffnung über die Oberfläche und die Nut bewegt wird, um einen an der Abgabeöffnung abgegebenen, an der Oberfläche aufliegenden Nutdeckschieber in die Nut einzuschieben.

Es ist bevorzugt, dass die Schritte a) und c) durchgeführt werden mittels des Schritts:
a2) Ablegen der Menge leistenförmiger Nutdeckschieber auf der Oberfläche des Gegenstücks derart, dass die Nutdeckschieber mit ihrer Längsrichtung zueinander und zu der Erstreckung der wenigstens einen Nut ausgerichtet sind und dass Schritt d) umfasst:
d2) relatives Bewegen der Menge gemäß Schritt a2) ausgerichteter Nutdeckschieber und der Oberfläche in Richtung quer zur Längsrichtung der Nutdeckschieber und der Nut, so dass die Nutdeckschieber über den mit der Nut versehenen Bereich der Oberfläche verschoben werden.

Vorzugsweise umfasst Schritt b):
b1) Bereitstellen des Gegenstücks derart, dass die Oberfläche gekrümmt oder zylindermantelförmig, vorzugsweise mit einer an den Radius des mit Nutdeckschiebern zu versehenden Stators angepassten Krümmung, ausgebildet ist.

Vorzugsweise umfasst Schritt b):
b2) Bereitstellen des Gegenstücks derart, dass die Oberfläche mehrere nebeneinander angeordnete Nuten aufweist, insbesondere derart, dass der Abstand der Nuten dem Abstand der Statornuten des mit Nutdeckschiebern zu versehenden Stators entspricht.

Vorzugsweise umfasst Schritt b):
b3) Bereitstellen des Gegenstücks derart, dass die Oberfläche eben ausgebildet ist.

Vorzugsweise umfasst Schritt d):
d3) relatives Hin- und Her-Bewegen der Menge Nutdeckschieber über die Oberfläche und die Nut.

Vorzugsweise umfasst Schritt d):
d4) Bewegen der Menge Nutdeckschieber, vorzugsweise bei stationärem Gegenstück, insbesondere mittels Bewegens der Aufnahme oder mittels Bewegens eines die Menge Nutdeckschieber schiebenden Schwerts oder Schiebers.

Vorzugsweise umfasst Schritt d):
d5) Bewegen des Gegenstücks, vorzugsweise bei stationärer Menge Nutdeckschiebern.

Vorzugsweise umfasst Schritt d):
d6) Verschwenken der Menge Nutdeckschieber, insbesondere in der Aufnahme, relativ zu dem Gegenstück mit gekrümmter Oberfläche.

Vorzugsweise umfasst Schritt d):
d7) lineares Bewegen der Menge Nutdeckschieber, insbesondere in der Aufnahme, relativ zu dem Gegenstück mit ebener Oberfläche.

Vorzugsweise umfasst Schritt e):
e1) Verwenden wenigstens eines über die Oberfläche des Gegenstücks zu bewegenden Abstreifers, um die Nutdeckschieber in die Nut einzuschieben.

Vorzugsweise umfasst Schritt e):
e2) Bereitstellen je eines Abstreifers an jeder Längsseite eines Schiebers oder an je einer Längsseite der Abgabeöffnung der Aufnahme, vorzugsweise im Bereich jeder unteren Längskante der Aufnahme.

Vorzugsweise umfasst Schritt e):
e3) Verwenden einer Bürstenanordnung oder Bürstenleiste zum Einbürsten der Nutdeckschiebern, insbesondere Verwenden der Bürstenordnung als Abstreifer.

Gemäß einem weiteren Aspekt schafft die Erfindung ein im Zuge eines Herstellverfahrens für einen Stator durchzuführendes Einsetzverfahren zum Einsetzen von Nutdeckschiebern in Statornuten zwecks Abdeckens darin befindlicher Leiter, umfassend:
1) Bereitstellen eines ringförmigen Statorbauteils mit Statornuten, in denen Leiter zum Bilden einer Spulenwicklung aufgenommen sind,
2) Bereitstellen vereinzelter Nutdeckschieber durch Durchführen des Vereinzelungsverfahrens nach einer der voranstehenden Ausgestaltungen,
3) Überführen des jeweiligen Nutdeckschiebers von der Nut in der Oberfläche in die Statornut, um die Leiter abzudecken.

Bevorzugt umfasst bei dem Einsetzverfahren Schritt b):
b1a) Bereitstellen des Gegenstücks, so dass die nach oben weisende Oberfläche mit an das Statorbauteil angepasster konkaver Krümmung versehen ist, und in der konkav gekrümmten Oberfläche die wenigstens eine an die Form der Nutdeckschieber komplementär angepasste nach oben offene sich in axialer Richtung erstreckende Nut vorgesehen ist, wobei die Krümmung und die Anordnung der wenigstens einen Nut derart gewählt sind, dass die radiale Lage der wenigstens einen Nut der radialen Lage des eingesetzten Nutdeckschiebers in einer Statornut entspricht.

Bevorzugt umfasst Schritt 3):
f) Ausrichten der wenigstens einen Nut in dem Vereinzelungswerkzeug mit wenigstens einer Statornut und
g) Verschieben des jeweiligen Nutdeckschiebers in Längsrichtung aus der Nut des Vereinzelungswerkzeugs in die damit ausgerichtete Statornut.

Gemäß einem weiteren Aspekt schafft die Erfindung eine
Vereinzelungsvorrichtung zum Durchführen des Vereinzelungsverfahrens nach einer der voranstehenden Ausgestaltungen, umfassend:
eine Bereitstelleinrichtung zum Bereitstellen einer Menge von leistenförmigen Nutdeckschiebern derart, dass die Nutdeckschieber in Längsrichtung ausgerichtet, ansonsten ungeordnet als Schüttgut vorliegen;
ein Gegenstück mit einer nach oben weisenden Oberfläche, in der eine an die Außenkontur der Nutdeckschieber angepasste, nach oben offene Nut vorgesehen ist, in der ein Nutdeckschieber ausgerichtet aufnehmbar ist, und
eine Bewegungseinrichtung zum relativen Bewegen der zu der Längsrichtung der Nut ausgerichteten Menge Nutdeckschieber und des Gegenstücks, um die Menge Nutdeckschiebers über die Nut zu verfahren.

Es ist bevorzugt, dass die Bereitstelleinrichtung eine längliche Aufnahme zum Aufnehmen einer Anzahl von leistenförmigen Nutdeckschiebern aufweist, wobei die Aufnahme eine längliche Abgabeöffnung aufweist, so dass die Nutdeckschieber in der Aufnahme in der Längsrichtung ausgerichtet, ansonsten aber ungeordnet als Schüttgut aufgenommen werden können, wobei die wenigstens eine Nut zur Längsrichtung der Aufnahme ausgerichtet ist und wobei die Bewegungseinrichtung dazu ausgebildet ist, die Aufnahme relativ zum Gegenstück zu bewegen, um die Abgabeöffnung über die Oberfläche mit der Nut zu verfahren.

Bei der Aufnahme ist bevorzugt, dass im Bereich wenigstens einer Längsberandung der Abgabeöffnung, vorzugsweise beidseits, wenigstens ein Abstreifer aus flexiblem Material zum Einfügen des zu vereinzelnden Nutdeckschiebers in die Nut angeordnet ist.

Es ist bevorzugt, dass die Aufnahme einen rechteckigen, parallelogrammförmigen oder trapezförmigen Querschnitt aufweist.

Es ist bevorzugt, dass an beiden unteren in Längsrichtung verlaufenden Eckkanten der Aufnahme Bürsten zum Einfügen des zu vereinzelnden Nutdeckschiebers in die Nut angeordnet sind.

Bei dem Gegenstück ist bevorzugt, dass die Oberfläche zumindest bereichsweise gekrümmt, vorzugsweise kreisbogenförmig gekrümmt ist.

Bei dem Gegenstück ist bevorzugt, dass die Oberfläche zumindest bereichsweise eben ausgebildet ist.

Bei dem Gegenstück ist bevorzugt, dass die Oberfläche mehrere der Nuten aufweist, die nebeneinander angeordnet sind.

Es ist bevorzugt, dass die Bewegungseinrichtung zum Bewegen der Menge Nutdeckschieber oder der Aufnahme ausgebildet ist.

Es ist bevorzugt, dass die Bewegungseinrichtung zum Bewegen des Gegenstücks ausgebildet ist.

Es ist bevorzugt, dass die Bewegungseinrichtung zum Verschwenken der Menge Nutdeckschieber oder der Aufnahme relativ zu dem Gegenstück ausgebildet ist.

Es ist bevorzugt, dass die Bewegungseinrichtung zum linearen Bewegen der Menge Nutdeckschieber oder der Aufnahme relativ zu dem Gegenstück ausgebildet ist.

Es ist bevorzugt, dass die Bewegungseinrichtung um eine Schwenkachse schwenkbar ist. Es ist bevorzugt, dass die Bewegungseinrichtung ein Schwert oder einen Schieber zum Schieben der ausgerichteten Menge Nutdeckschieber über die Oberfläche aufweist.

Gemäß einem weiteren Aspekt schafft die Erfindung ein Verwenden einer Vereinzelungsvorrichtung nach einer der voranstehenden Ausgestaltungen zur Herstellung eines Stators, wobei der in der Nut des Gegenstücks ausgerichtet angeordnete Nutdeckschieber zum Abdecken von Leitern in eine Statornut eingeschoben wird, wobei insbesondere die Krümmung der Oberfläche des Gegenstücks an die Krümmung des mit den abzudeckenden Mündungen der Statornuten versehenen Bereichs des Stators angepasst ist.

Bevorzugte Ausführungsformen der Erfindung betreffen die Handhabung von NutDeckschieber, insbesondere das Vereinzeln und Bereitstellen zum Einschieben oder Einsetzen in Statornuten.

Mit bevorzugten Ausführungsformen der Erfindung lassen sich die Deckschieber zunächst vereinzeln und lagerichtig bereitstellen, damit sie in den Stator mit möglichst wenig Handhabungsaufwand gefügt werden können.

Ein Ausführungsbeispiel wird im Folgenden anhand der beigefügten Zeichnungen näher erläutert. Darin zeigt:
- Fig. 1: eine schematische Querschnittdarstellung einer ersten Ausführungsform einer Vereinzelungsvorrichtung;
- Fig. 2a bis 2d: Schnittdarstellungen eines Bereichs eines Gegenstücks, das zum Vereinzeln und Ausrichten von Nutdeckschiebern verwendbar ist und mit einer Nut versehen ist, bei verschiedenen Schritten zum Einfügen eines Nutdeckschiebers in eine Nut;
- Fig. 3: eine schematische Querschnittsdarstellung einer zweiten Ausführungsform einer Vereinzelungsvorrichtung;
- Fig. 4: eine schematische Querschnittsdarstellung einer dritten Ausführungsform einer Vereinzelungsvorrichtung;
- Fig. 5: eine schematische Querschnittsdarstellung einer vierten Ausführungsform einer Vereinzelungsvorrichtung;
- Fig. 6: eine schematische Querschnittsdarstellung einer fünften Ausführungsform einer Vereinzelungsvorrichtung; und
- Fig. 7: eine schematische Querschnittsdarstellung einer Anordnung einer Vereinzelungsvorrichtung in einer Ausführung gemäß einer der Fig. 1, 3 bis 6 und eines Blechpakets zum Bilden eines Stators im Zuge der Herstellung des Stators.

Im Folgenden werden anhand der Figuren unterschiedliche Ausführungsformen eines Vereinzelungsverfahrens und von vorteilhaften Vereinzelungsvorrichtungen 10 erläutert. Das Vereinzelungsverfahren lässt sich besonders vorteilhaft mit einer der dargestellten Ausführungsformen der Vereinzelungsvorrichtung 10 durchführen, ist aber auch auf andere Art und Weise durchführbar.

Das Vereinzelungsverfahren ist ein Verfahren zum Vereinzeln und vorzugsweise lagerichtigen Bereitstellen von Nutdeckschiebern 12 im Zuge der Herstellung eines Stators 14. Die Nutdeckschieber 12 sind zum Abdecken von Statornuten 16 ausgebildet, die mit Leitern zum Bilden einer Spulenwicklung versehen sind.

Das Vereinzelungsverfahren umfasst die Schritte:
a) Bereitstellen einer Menge 18 von leistenförmigen Nutdeckschiebern 12 derart, dass die Nutdeckschieber 12 zueinander in Längsrichtung ausgerichtet, ansonsten ungeordnet als Schüttgut vorliegen,
b) Bereitstellen eines Vereinzelungswerkzeug (hier Gegenstück 20 genannt), das eine nach oben weisende Oberfläche 22 mit wenigstens einer an die Form der Nutdeckschieber 12 komplementär angepasste nach oben offene Nut 22 aufweist,
c) Anordnen der Menge 18 von Nutdeckschiebern 12 parallel zu der wenigstens einen Nut 24;
d) relatives Bewegen der Menge 18 von Nutdeckschiebern 12 und des Gegenstücks 20 in Richtung quer zu der Längserstreckung der Nut 24 und der damit ausgerichteten Nutdeckschieber 12, so dass die Menge 18 von Nutdeckschiebern 12 über den mit der Nut 24 versehenen Bereich der Oberfläche 22 bewegt wird,
e) Einfügen eines Nutdeckschiebers 12 in die Nut 24, um den Nutdeckschieber 12 auch bezüglich seiner Winkellage um seine Längsmittelachse in der Nut 24 auszurichten.

Die Benennung der Schritte mit a), b), c), ... soll lediglich der einfacheren Bezugnahme dienen und gibt keine bestimmte Reihenfolge der Schritte an. Vorzugsweise werden die Schritte a) und c) gemeinsam durchgeführt, indem die Menge 18 von Nutdeckschiebern bereits in der zu der Nut parallelen Lage an der Oberfläche 22 bereitgestellt wird. Dies kann durch Bereitstellen einer Aufnahme erfolgen, in der die Menge 18 enthalten ist und die relativ zu dem Gegenstück 20 bewegbar ist, oder die Nutdeckschieber 12 werden auf der Oberfläche 22 insbesondere in Längsrichtung zueinander abgelegt und in Richtung der Nut orientiert und dann relativ zu dem Gegenstück 20 über die Oberfläche bewegt. Die Relativbewegung zwischen der Menge 18 von Nutdeckschiebern 12 und dem Gegenstück 20 kann durch Bewegen der Menge 18 von Nutdeckschiebern 12 bei stationärem Gegenstück 20 erfolgen oder alternativ durch Bewegen des Gegenstücks 20 bei stationärer Menge 18 oder durch gegenläufige Bewegung des Gegenstücks 20 und der Menge 18 von Nutdeckschiebern 12.

Bei dieser Bewegung wird jeweils ein Nutdeckschieber 12 in die Nut 24 oder in eine von mehreren Nuten 24 in der Oberfläche 22 des Gegenstücks 20 eingefügt. Der vorher nur in Längsrichtung ausgerichtete, ansonsten ungeordnet in der Menge 18 angeordnete Nutdeckschieber 12 wird dann in der Nut 24 auch hinsichtlich seiner Lage des Querschnitts ausgerichtet, in dem die Außenkontur des Nutdeckschiebers 12 sich an die komplementäre Form der Nut anlegt. Somit ist der Nutdeckschieber 12 in der Nut 24 auch hinsichtlich seiner Winkellage um seine Längsmittelachse herum (d.h. Drehlage zu seiner Längsachse) ausgerichtet.

Die Zeichnungen zeigen jeweils Querschnitte durch unterschiedliche Ausführungsformen der Vereinzelungsvorrichtung 10, wobei die Querschnitte quer zur Längsrichtung oder Längsmittelachse der Nuten 24 und auch der zu diesen parallel ausgerichteten Nutdeckschieber 12 verlaufen. Dabei sind entsprechende Teile der Vereinzelungsvorrichtung 10 jeweils mit entsprechenden Bezugsziffern versehen, und sie werden jeweils nur einmal beschrieben. Die unterschiedlichen Merkmale der unterschiedlichen Ausführungsformen der Vereinzelungsvorrichtung 10 sind beliebig miteinander kombinierbar.

Bei den unterschiedlichen in den Figuren dargestellten Ausführungsformen weist die Vereinzelungsvorrichtung 10 das Vereinzelungswerkzeug, hier Gegenstück 20 genannt, mit der nach oben weisenden Oberfläche 22 und der in der Oberfläche 22 ausgebildeten wenigstens einen Nut 24 sowie eine optionale Bewegungseinrichtung 28 auf. Die Bewegungseinrichtung 28 ist zum relativen Bewegen der zu der Längsrichtung der Nut 24 ausgerichteten Menge 18 von Nutdeckschiebern 12 und des Gegenstücks 20 ausgebildet, um so die Menge 18 von Nutdeckschiebern 12 über die Nut 24 zu verfahren. Bei einigen Ausführungsformen ist die optionale Aufnahme 26 vorgesehen.

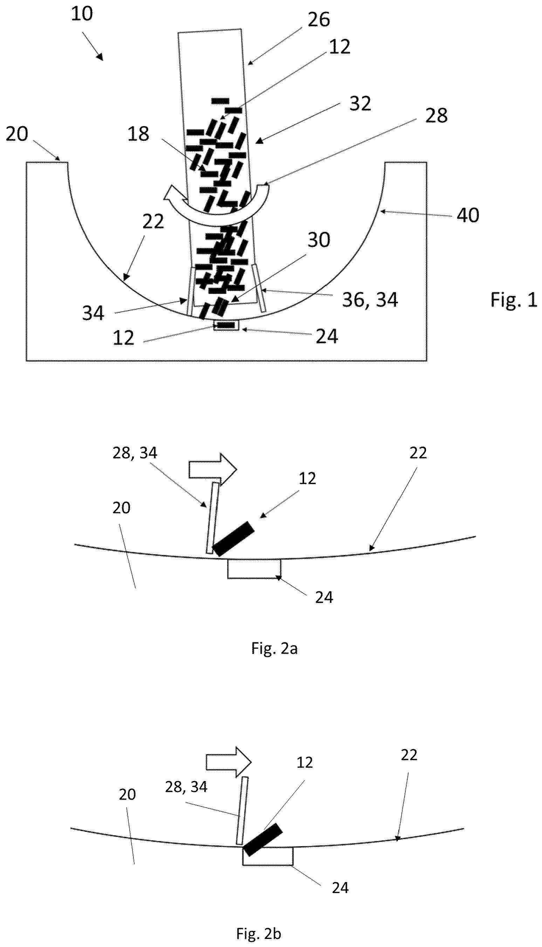

Fig. 1 zeigt eine erste Ausführungsform der Vereinzelungsvorrichtung 10. Die Vereinzelungsvorrichtung 10 weist Aufnahme 26 für die Nutdeckschieber 12, das Gegenstück 20 und die Bewegungseinrichtung 28 auf. Die Nutdeckschieber 12 sind längs ausgerichtet, haben allerdings keine genaue Orientierung zur Drehlage (Winkellage) um die Längsachse. Die Aufnahme 26 ist hier mittels der Bewegungseinrichtung 28 schwenkbar ausgeführt und kann im Gegenstück 20 von einer zur anderen Seite schwenken. Die Oberfläche 22 ist hier bogenförmig gekrümmt ausgebildet. In dem dadurch hohl ausgebildeten Gegenstück 20 befindet sich die Nut 24, die an die Geometrie der jeweiligen Nutdeckschieber 12 angepasst ist. De Bewegungseinrichtung 28 weist einen nicht näher dargestellten Schwenkantrieb zum Hin- und Herschwenken der Aufnahme 26 auf.

Die Aufnahme 26 ist zum Aufnehmen einer Anzahl von leistenförmigen Nutdeckschiebern 12 länglich ausgebildet. Beispielsweise ist die Aufnahme 26 kastenförmig oder trichterförmig ausgebildet. Die Aufnahme 26 weist eine längliche Abgabeöffnung 30 auf. Die Nutdeckschieber 12 sind so in der Aufnahme 26 in der Längsrichtung ausgerichtet, ansonsten aber ungeordnet als Schüttgut aufgenommen. Insbesondere sind sie hinsichtlich ihrer Winkellage um die Längsachse noch unorientiert. Die Nutdeckschieber 12 können so einfach von oben in die Aufnahme 26 geschüttet werden. Die Aufnahme 26 ist ein Beispiel für eine Bereitstelleinrichtung 32 zum Bereitstellen einer Menge 18 von Nutdeckschiebern 12, die zueinander in ihrer Längsrichtung ausgerichtet sind, ansonsten aber als Schüttgut vorliegen können. Durch Anordnen der Aufnahme 26 parallel zu der Nut 24 lassen sich die Nutdeckschieber 12 insgesamt parallel zu der Nut 24 ausrichten (Beispiel für das Durchführen des Schritts c)).

An der Abgabeöffnung 30 hat die Aufnahme 26 wenigstens einen Abstreifer 34. Bei den dargestellten Ausführungen ist auf jeder Längsseite der Aufnahmeöffnung 30 ein Abstreifer 34 vorgesehen. Der Abstreifer 34 kann verschieden ausgeführt sein, vorzugsweise ist der Abstreifer 34 leistenförmig mit einem flexiblen Bereich zum Überstreichen über die Oberfläche 22 ausgebildet. Besonders bevorzugt weist der Abstreifer 34 jeweils wenigstens eine Bürste 36 auf.

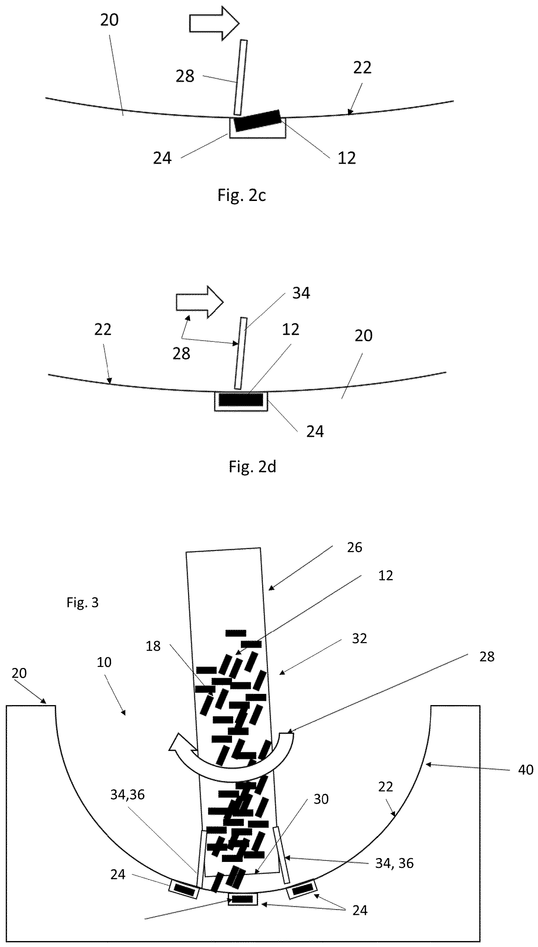

Beim Schwenkvorgang über die Nut 24 wird ein Nutdeckschieber 12 in dieser Nut 24 vereinzelt. Die einzelnen Schritte zum Einfügen des Nutdeckschiebers 12 in die Nut 24 sind in den Fig. 2a bis 2d dargestellt. Dabei wird der Nutdeckschieber 12 mittels des Abstreifers 34/der Bürste 36 über die Oberfläche 22 bis zur Nut 24 geschoben und dann in die Nut 24 eingeschoben, wo er sich mit seiner Außenkontur in die komplementäre Form der Nut legt und somit in seiner Drehlage oder Winkellage bezüglich seiner Längsachse ausgerichtet wird.

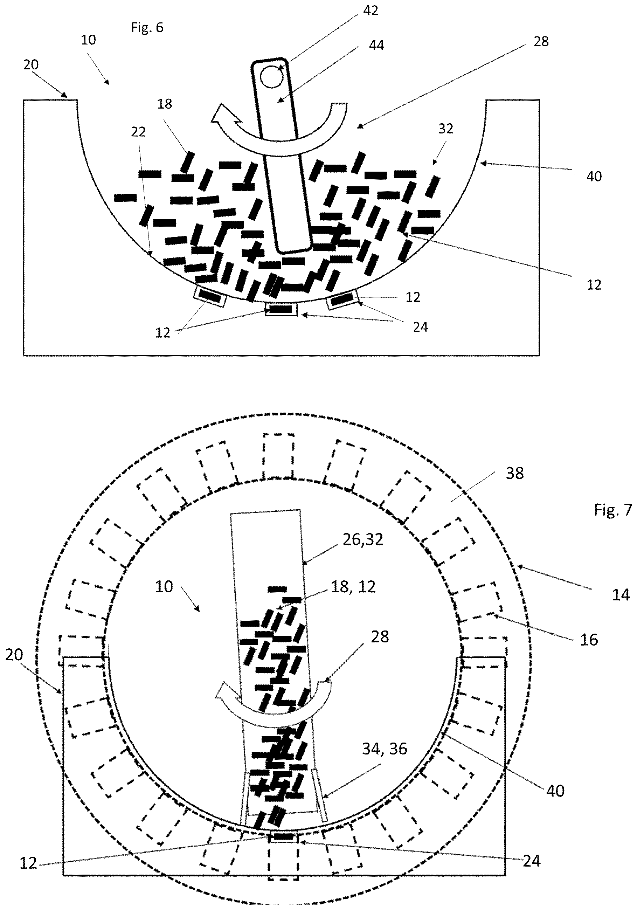

Bei einigen Ausführungsformen wie z.B. gemäß den Fig. 1, 3, 5 bis 7 hat die Oberfläche 22 des Gegenstücks 20 einen Radius / Durchmesser 40, der - wie in Fig. 7 gezeigt -an den Stator 14, genauer dessen Blechpaket 38 angepasst ist. Somit kann der Nutdeckschieber 12 lagerichtig in den Stator 14 gefügt werden. Somit ist keine weitere Umorientierung notwendig.

Wie bei der Ausführungsform von Fig. 3 gezeigt, können an der Oberfläche 22 auch mehrere der Nuten 24 ausgebildet sein, vorzugsweise derart, dass deren Lage und Abstand an die Lage und den Abstand der Statornuten 16 angepasst ist. Somit kann das Vereinzeln und Ausrichten in den mehreren Nuten 24 gleichzeitig erfolgen und auch das Einfügen der Nutdeckschieber 12 aus den Nuten 24 in die jeweiligen Statornuten 16 kann gleichzeitig erfolgen. Demnach kann das Gegenstück 20 um weitere Nuten 24 erweitert werden, und so können mit einer Schwenkbewegung mehrere Nutdeckschieber 12 vereinzelt und dann gleichzeitig gefügt werden.

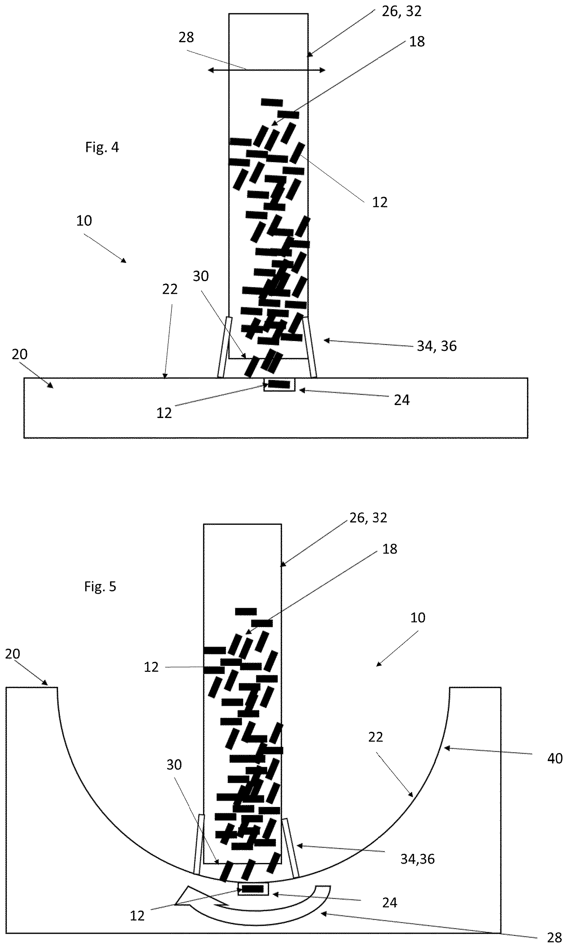

Wie bei der Ausführungsform von Fig. 4 gezeigt, kann die Oberfläche 22 des Gegenstücks 20 auch abweichend von der Krümmung des Blechpakets 38 ausgeführt werden, wie hier z.B. linear. Die Bewegungseinrichtung 28 bewegt dann die Menge 18 von Nutdeckschiebern 12 relativ zu dem Gegenstück 20 linear, beispielsweise indem die Aufnahme 26 linear über das Gegenstück 20 hin und her verschoben wird.

Wie in Fig. 4 gezeigt kann das Gegenstück 20 bei nur einer Nut 24 auch flach, ohne Radius ausgeführt werden. Bei einer linearen Ausführung wäre es auch möglich, eine Umorientierung der Nutdeckschieber zur Anpassung an die Lage in der Statornut durch eine zusätzliche Kulisse beim Einschieben zu realisieren (nicht dargestellt). Somit können auch in der flachen Ausbildung die mehreren Nuten 24 vorgesehen sein, wobei die Nutdeckschieber 12 gleichzeitig in die Statornuten 16 überführt werden, gegebenenfalls unter Umorientierung über die zusätzlichen Kulissen.

Wie oben bereits erwähnt kann die Bewegungseinrichtung 28 dazu ausgebildet sein, die Menge 18 von Nutdeckschiebern 12 bei stationärem Gegenstück 20 über die Oberfläche 22 zu bewegen, wie dies bei den Ausführungsformen der Fig. 1 bis 4 und 6 und 7 dargestellt ist. Wie bei der Ausführungsform gemäß der Fig. 5 gezeigt, kann die Bewegungseinrichtung 28 aber auch dazu ausgebildet sein, das Gegenstück 20 bei stationärer (oder gegenläufig bewegter) Menge 18 von Nutdeckschiebern 12 zu bewegen, insbesondere hin und her zu schwingen.

In Fig. 6 ist eine weitere Ausführungsform der Vereinzelungsvorrichtung 10 gezeigt, die ohne die Aufnahme 26 auskommt. Die Bereitstelleinrichtung 32 wird hier im Wesentlichen durch das Vereinzelungswerkzeug (hier Gegenstück 20 genannt) gebildet, auf der die Menge 18 von Nutdeckschiebern 12 entsprechend in Längsrichtung zur Nut 24 ablegbar sind. Hier weist die Bewegungseinrichtung 28 einen Schieber oder dergleichen, wie z.B. ein um eine Drehachse 42 drehbares oder hin und her schwenkbares Schwert 44 auf.

Die Nutdeckschieber 12 werden hier direkt in das Gegenstück 20 befüllt und werden durch das Schwert 44 oder dergleichen an den Nuten 24 (auch eine Ausführung mit nur einer Nut 24 ist möglich) vorbeigeführt. Die in Bewegung gesetzte Menge 18 von Nutdeckschiebern 12 schiebt einzelne Nutdeckschieber 12 an den Nuten 24 vorbei, die in den offenen Nuten 24 abgelegt und vereinzelt werden. Somit ist es nicht erforderlich, dass das Schwert 44 oder dergleichen bis an die Oberfläche 22 des Gegenstücks 20 reicht. Bei einigen nicht dargestellten Ausführungen ist es für bestimmte Fälle auch von Vorteil, dass das Schwert 44 bis an den Grund - d.h. hier die Oberfläche 22 - reicht.

Bei weiteren nicht dargestellten Ausführungen ist weiter vorgesehen, dass auch hier mit einem Abstreifer 34, z.B. mit zusätzlichen Bürsten 36 am Schwert 44, der Vereinzelungsprozess optimiert wird.

Fig. 7 zeigt das im Zuge des Herstellverfahren für den Stator 14 durchzuführende Verfahren zum Einsetzen von Nutdeckschiebern 12 in Statornuten 16 zwecks Abdeckens darin befindlicher Leiter, umfassend:
Bereitstellen des ringförmigen Statorbauteils - z.B. das Blechpaket 38 - mit Statornuten 16, in denen (nicht dargestellte) Leiter zum Bilden einer Spulenwicklung aufgenommen sind,
Bereitstellen der vereinzelten Nutdeckschieber durch Durchführen des Vereinzelungsverfahrens wie zuvor erläutert, hier durch Anlegen des Gegenstücks 20 mit dem in der wenigstens einen Nut 24 lagerichtig aufgenommenen einzelnen Nutdeckschieber 12;
Überführen des jeweiligen Nutdeckschiebers 12 von der Nut 24 in der Oberfläche 22 in die Statornut 16, um die Leiter abzudecken.

Hierzu werden vorzugsweise folgende Schritte durchgeführt:
f) Ausrichten der wenigstens einen Nut 24 in dem Vereinzelungswerkzeug mit wenigstens einer Statornut 16 - insbesondere durch Drehen des Statorbauteils um seine Achse bis die Nuten 24, 16 miteinander fluchten - und
g) Verschieben des jeweiligen Nutdeckschiebers 12 in Längsrichtung aus der Nut 24 des Vereinzelungswerkzeugs in die damit ausgerichtete Statornut 16.

Um die Handhabung von Nutdeckschiebern (12) wesentlich zu vereinfachen und insbesondere automatisierbar zu machen, ist ein im Zuge der Herstellung eines Stators (14) durchzuführendes Vereinzelungsverfahren zum Vereinzeln von Nutdeckschiebern (12) zum Abdecken von mit Leitern zum Bilden einer Spulenwicklung versehenen Statornuten (16) beschrieben worden, umfassend die Schritte:
a) Bereitstellen einer Menge (18) von leistenförmigen Nutdeckschiebern (12) derart, dass die Nutdeckschieber (12) zueinander in Längsrichtung ausgerichtet, ansonsten ungeordnet als Schüttgut vorliegen,
b) Bereitstellen eines Gegenstücks (20), das eine nach oben weisende Oberfläche (22) mit wenigstens einer an die Form der Nutdeckschieber (12) komplementär angepassten nach oben offenen Nut (24) aufweist,
c) Anordnen der Menge (18) von Nutdeckschiebern (12) parallel zu der wenigstens einen Nut (24);
d) relatives Bewegen der Menge (18) von Nutdeckschiebern (12) und des Gegenstücks (20) in Richtung quer zu der Längserstreckung der Nut (24) und der damit ausgerichteten Nutdeckschieber (12), so dass die Menge (18) von Nutdeckschiebern (12) über den mit der Nut (24) versehenen Bereich der Oberfläche (22) bewegt wird,
e)Einfügen eines Nutdeckschiebers (12) in die Nut (24), um den Nutdeckschieber (12) auch bezüglich seiner Drehlage um seine Längsachse in der Nut (24) auszurichten.

### Bezugszeichenliste:

- 10: Vereinzelungsvorrichtung
- 12: Nutdeckschieber
- 14: Stator
- 16: Statornut
- 18: Menge Nutdeckschieber
- 20: Gegenstück (Vereinzelungswerkzeug)
- 22: nach oben weisende Oberfläche
- 24: Nut (Gegenstück)
- 26: Aufnahme
- 28: Bewegungseinrichtung
- 30: Abgabeöffnung
- 32: Bereitstelleinrichtung
- 34: Abstreifer
- 36: Bürsten
- 38: Blechpaket
- 40: an Stator angepasster Durchmesser
- 42: Drehachse
- 44: Schwert

## Patentansprüche

1. Im Zuge der Herstellung eines Stators (14) durchzuführendes Vereinzelungsverfahren zum Vereinzeln von Nutdeckschiebern (12) zum Abdecken von mit Leitern zum Bilden einer Spulenwicklung versehenen Statornuten (16), umfassend die Schritte:
a) Bereitstellen einer Menge (18) von leistenförmigen Nutdeckschiebern (12) derart, dass die Nutdeckschieber (12) zueinander in Längsrichtung ausgerichtet, ansonsten ungeordnet als Schüttgut vorliegen,
b) Bereitstellen eines Gegenstücks (20), das eine nach oben weisende Oberfläche (22) mit wenigstens einer an die Form der Nutdeckschieber (12) komplementär angepassten nach oben offenen Nut (24) aufweist,
c) Anordnen der Menge (18) von Nutdeckschiebern (12) parallel zu der wenigstens einen Nut (24);
d) relatives Bewegen der Menge (18) von Nutdeckschiebern (12) und des Gegenstücks (20) in Richtung quer zu der Längserstreckung der Nut (24) und der damit ausgerichteten Nutdeckschieber (12), so dass die Menge (18) von Nutdeckschiebern (12) über den mit der Nut (24) versehenen Bereich der Oberfläche (22) bewegt wird,
e) Einfügen eines Nutdeckschiebers (12) in die Nut (24), um den Nutdeckschieber (12) auch bezüglich seiner Drehlage um seine Längsachse in der Nut (24) auszurichten.

2. Vereinzelungsverfahren nach Anspruch 1, **dadurch gekennzeichnet,**
**dass** die Schritte a) und c) durchgeführt werden mittels des Schritts:
a1) Einfügen einer Menge (18) von leistenförmigen Nutdeckschiebern (12) in eine längliche, zu der Längsrichtung der Nut (24) ausgerichteten Aufnahme (26) derart, dass die Nutdeckschieber (12) darin in Längsrichtung ausgerichtet, ansonsten ungeordnet als Schüttgut vorliegen und über eine längliche Abgabeöffnung (30) am unteren Ende der Aufnahme (26) abgegeben werden können, und dass Schritt d) umfasst:
d1) relatives Bewegen der Aufnahme (26) über das Gegenstück (20), so dass die Aufnahme (26) mit der Abgabeöffnung (30) und der mit der Nut (24) versehene Bereich der Oberfläche (22) relativ zueinander aneinander vorbei bewegt werden.

3. Vereinzelungsverfahren nach Anspruch 2, **dadurch gekennzeichnet,**
**dass** Schritt e) unter Verwendung wenigstens eines Abstreifers (34) durchgeführt wird, der in Bewegungsrichtung nach der Abgabeöffnung (30) über die Oberfläche (22) und die Nut (24) bewegt wird, um einen an der Abgabeöffnung (30) abgegebenen, an der Oberfläche (22) aufliegenden Nutdeckschieber (12) in die Nut (24) einzuschieben.

4. Vereinzelungsverfahren nach Anspruch 1, **dadurch gekennzeichnet,**
**dass** die Schritte a) und c) durchgeführt werden mittels des Schritts:
a2) Ablegen der Menge (18) von leistenförmigen Nutdeckschiebern (12) auf der Oberfläche (22) des Gegenstücks (20) derart, dass die Nutdeckschieber (12) mit ihrer Längsrichtung zueinander und zu der Erstreckung der wenigstens einen Nut (24) ausgerichtet sind und dass Schritt d) umfasst:
d2) relatives Bewegen der Menge (18) von gemäß Schritt a2) ausgerichteten Nutdeckschiebern (12) und der Oberfläche (22) in Richtung quer zur Längsrichtung der Nutdeckschieber (12) und der Nut (24), so dass die Nutdeckschieber (12) über den mit der Nut (24) versehenen Bereich der Oberfläche (22) verschoben werden.

5. Vereinzelungsverfahren nach einem der voranstehenden Ansprüche,
**dadurch gekennzeichnet, dass** Schritt b) wenigstens einen oder mehrere der folgenden Schritte umfasst:
b1) Bereitstellen des Gegenstücks (20) derart, dass die Oberfläche (22) gekrümmt oder zylindermantelförmig, vorzugsweise mit einer an den Radius des mit Nutdeckschiebern (12) zu versehenden Stators (14) angepassten Krümmung, ausgebildet ist;
b2) Bereitstellen des Gegenstücks (20) derart, dass die Oberfläche (22) mehrere nebeneinander angeordnete Nuten (24) aufweist, insbesondere derart, dass der Abstand der Nuten (24) dem Abstand der Statornuten (16) des mit Nutdeckschiebern (12) zu versehenden Stators (14) entspricht;
b3) Bereitstellen des Gegenstücks (22) derart, dass die Oberfläche (22) eben ausgebildet ist.

6. Vereinzelungsverfahren nach einem der voranstehenden Ansprüche,
**dadurch gekennzeichnet, dass** Schritt d) wenigstens einen oder mehrere der folgenden Schritte umfasst:
d3) relatives Hin- und Her-Bewegen der Menge (18) von Nutdeckschiebern (12) über die Oberfläche (22) und die Nut (24);
d4) Bewegen der Menge (18) von Nutdeckschiebern (12), vorzugsweise bei stationärem Gegenstück (20), insbesondere mittels Bewegens der Aufnahme (24) oder mittels Bewegens eines die Menge (18) von Nutdeckschiebern (12) schiebenden Schwerts (44) oder Schiebers;
d5) Bewegen des Gegenstücks (20), vorzugsweise bei stationärer Menge (18) von Nutdeckschiebern (12);
d6) Verschwenken der Menge (18) von Nutdeckschiebern (12), insbesondere in der Aufnahme (26), relativ zu dem Gegenstück (22) mit gekrümmter Oberfläche;
d7) lineares Bewegen der Menge (18) von Nutdeckschiebern, insbesondere in der Aufnahme (26), relativ zu dem Gegenstück (22) mit ebener Oberfläche.

7. Vereinzelungsverfahren nach einem der voranstehenden Ansprüche,
**dadurch gekennzeichnet,**
**dass** Schritt e) umfasst:
e1) Verwenden wenigstens eines über die Oberfläche (22) des Gegenstücks (24) zu bewegenden Abstreifers (34), um die Nutdeckschieber (12) in die Nut einzuschieben;
e2) Bereitstellen je eines Abstreifers (34) an jeder Längsseite eines Schiebers oder an je einer Längsseite der Abgabeöffnung (30) der Aufnahme (26), vorzugsweise im Bereich jeder unteren Längskante der Aufnahme (26);
e3) Verwenden einer Bürstenanordnung oder Bürstenleiste zum Einbürsten der Nutdeckschieber (12), insbesondere Verwenden der Bürstenanordnung als Abstreifer (34).

8. Im Zuge eines Herstellverfahren für einen Stator (14) durchzuführendes Verfahren zum Einsetzen von Nutdeckschiebern (12) in Statornuten (16) zwecks Abdeckens darin befindlicher Leiter, umfassend:
8.1 Bereitstellen eines ringförmigen Statorbauteils (38) mit Statornuten (16), in denen Leiter zum Bilden einer Spulenwicklung aufgenommen sind,
8.2 Bereitstellen vereinzelter Nutdeckschieber (12) durch Durchführen des Vereinzelungsverfahrens nach einem der Ansprüche 1 bis 7,
8.3 Überführen des jeweiligen Nutdeckschiebers (12) von der wenigstens einen Nut (24) in der Oberfläche (22) in die Statornut (16), um die Leiter abzudecken.

9. Verfahren nach Anspruch 8, **dadurch gekennzeichnet,**
**dass** Schritt b) umfasst:
b1a) Bereitstellen des Gegenstücks (20), so dass die nach oben weisende Oberfläche (22) mit an das Statorbauteil (38) angepasster konkaver Krümmung versehen ist, und in der konkav gekrümmten Oberfläche (22) die wenigstens eine an die Form der Nutdeckschieber (12) komplementär angepasste nach oben offene sich in axialer Richtung erstreckende Nut (24) vorgesehen ist, wobei die Krümmung der Oberfläche (22) und die Anordnung der wenigstens einen Nut (24) derart gewählt sind, dass die radiale Lage der wenigstens einen Nut (24) der radialen Lage des eingesetzten Nutdeckschiebers (12) in einer Statornut (16) entspricht; und
**dass** Schritt 8.3 umfasst:
f) Ausrichten der wenigstens einen Nut (24) in dem Vereinzelungswerkzeug (20) mit wenigstens einer Statornut (16) und
g) Verschieben des jeweiligen Nutdeckschiebers (12) in Längsrichtung aus der Nut (24) des Vereinzelungswerkzeugs (20) in die damit ausgerichtete Statornut (16).

10. Vereinzelungsvorrichtung (10) zum Durchführen des Vereinzelungsverfahrens nach einem der Ansprüche 1 bis 7, wobei die Vereinzelungsvorrichtung (10) umfasst:
eine Bereitstelleinrichtung (32) zum Bereitstellen einer Menge von leistenförmigen Nutdeckschiebern (12) derart, dass die Nutdeckschieber in Längsrichtung ausgerichtet, ansonsten ungeordnet als Schüttgut vorliegen;
ein Gegenstück (20) mit einer nach oben weisenden Oberfläche (22), in der wenigstens eine an die Außenkontur der Nutdeckschieber (12) angepasste, nach oben offene Nut (24) vorgesehen ist, in der jeweils ein Nutdeckschieber (12) ausgerichtet aufnehmbar ist, und
eine Bewegungseinrichtung (28) zum relativen Bewegen der zu der Längsrichtung der Nut (24) ausgerichteten Menge (18) von Nutdeckschiebern (12) und des Gegenstücks (20), um die Menge (18) von Nutdeckschiebern (12) über die Nut (24) zu verfahren.

11. Vereinzelungsvorrichtung (10) nach Anspruch 10, **dadurch gekennzeichnet, dass** die Bereitstelleinrichtung (32) eine längliche Aufnahme (26) zum Aufnehmen einer Anzahl von leistenförmigen Nutdeckschiebern (12) aufweist, wobei die Aufnahme eine längliche Abgabeöffnung (30) aufweist, so dass die Nutdeckschieber (12) in der Aufnahme (26) in der Längsrichtung ausgerichtet, ansonsten aber ungeordnet als Schüttgut aufgenommen werden können, wobei die wenigstens eine Nut (24) zur Längsrichtung der Aufnahme (26) ausgerichtet ist und wobei die Bewegungseinrichtung (28) dazu ausgebildet ist, die Aufnahme (30) relativ zum Gegenstück (20) zu bewegen, um die Abgabeöffnung (30) über die Oberfläche (22) mit der Nut (24) zu verfahren.

12. Vereinzelungsvorrichtung (10) nach Anspruch 11,
**dadurch gekennzeichnet, dass** die Aufnahme (30) wenigstens eines oder mehrere der folgenden Merkmale aufweist:
12.1 dass im Bereich wenigstens einer Längsberandung der Abgabeöffnung (30), vorzugsweise beidseits, wenigstens ein Abstreifer (34) aus flexiblem Material zum Einfügen des zu vereinzelnden Nutdeckschiebers (12) in die Nut (24) angeordnet ist;
12.2 dass die Aufnahme (30) einen rechteckigen, parallelogrammförmigen oder trapezförmigen Querschnitt aufweist,
12.3 dass an beiden unteren in Längsrichtung verlaufenden Eckkanten Bürsten (36) zum Einfügen des zu vereinzelnden Nutdeckschiebers (12) in die Nut (24) angeordnet sind.

13. Vereinzelungsvorrichtung (10) nach einem der Ansprüche 10 bis 12, **dadurch gekennzeichnet, dass** das Gegenstück (20) wenigstens eines oder mehrere der folgenden Merkmale aufweist:
13.1 dass die Oberfläche (22) zumindest bereichsweise gekrümmt, vorzugsweise kreisbogenförmig gekrümmt ist;
13.2 dass die Oberfläche (22) zumindest bereichsweise eben ausgebildet ist;
13.3 dass die Oberfläche (22) mehrere der Nuten (24) aufweist, die nebeneinander angeordnet sind.

14. Vereinzelungsvorrichtung (10) nach einem der Ansprüche 10 bis 13, **dadurch gekennzeichnet, dass** die Bewegungseinrichtung (28)
14.1 zum Bewegen der Menge (18) von Nutdeckschiebern (12) oder der Aufnahme (26) ausgebildet ist;
14.2 zum Bewegen des Gegenstücks (20) ausgebildet ist,
14.3 zum Verschwenken der Menge (18) von Nutdeckschiebern (12) oder der Aufnahme (26) relativ zu dem Gegenstück (20) ausgebildet ist,
14.4 zum linearen Bewegen der Menge (18) von Nutdeckschiebern (12) oder der Aufnahme (26) relativ zu dem Gegenstück (20) ausgebildet ist; oder
14.5 ein, vorzugsweise um eine Schwenkachse (42) schenkbares, Schwert (44) oder einen Schieber zum Schieben der ausgerichteten Menge (18) von Nutdeckschiebern (12) über die Oberfläche (22) aufweist.

15. Verwenden einer Vereinzelungsvorrichtung (10) nach einem der Ansprüche 10 bis 14 zur Herstellung eines Stators (14), wobei der in der Nut (24) des Gegenstücks (20) ausgerichtet angeordnete Nutdeckschieber (12) zum Abdecken von Leitern in eine Statornut (16) eingeschoben wird, wobei insbesondere die Krümmung der Oberfläche (22) des Gegenstücks (20) an die Krümmung des mit den abzudeckenden Mündungen der Statornuten (16) versehenen Bereichs des Stators (14) angepasst ist.

## Claims

1. Separating method to be carried out in the course of manufacturing a stator (14) for separating slot cover slides (12) for covering stator slots (16) provided with conductors for forming a coil winding, the method comprising the steps of:
a) providing a quantity (18) of strip-shaped slot cover slides (12) in such a way that the slot cover slides (12) are aligned with each other in the longitudinal direction, but are otherwise present in a disordered state as a bulk material,
b) providing a counterpart (20) which has an upwardly facing surface (22) with at least one upwardly open slot (24) complementarily adapted to the shape of the slot cover slides (12),
c) arranging the quantity (18) of slot cover slides (12) parallel to the at least one slot (24);
d) relatively moving the quantity (18) of slot cover slides (12) and the counterpart (20) in a direction transverse to the longitudinal extension of the slot (24) and the slot cover slides (12) aligned therewith, so that the quantity (18) of slot cover slides (12) is moved over the region of the surface (22) provided with the slot (24),
e) inserting a slot cover slide (12) into the slot (24) in order to align the slot cover slide (12) also with respect to its rotational position about its longitudinal axis in the slot (24).

2. Separating method according to claim 1, **characterized in that** steps a) and c) are carried out by means of step:
a1) inserting a quantity (18) of strip-shaped slot cover slides (12) into an elongate receptacle (26) aligned with the longitudinal direction of the slot (24) in such a way that the slot cover slides (12) are present therein aligned in the longitudinal direction, but otherwise present in a disordered state as a bulk material and can be dispensed via an elongate dispensing opening (30) at the lower end of the receptacle (26), and **in that** step d) comprises:
d1) relatively moving the receptacle (26) over the counterpart (20), so that the receptacle (26) with the dispensing opening (30) and the region of the surface (22) provided with the slot (24) are moved past one another relative to one another.

3. Separating method according to claim 2, **characterized in that** step e) is carried out using at least one scraper (34) which is moved in the direction of movement after the dispensing opening (30) over the surface (22) and the slot (24) in order to push a slot cover slide (12), which is dispensed at the dispensing opening (30) and rests on the surface (22), into the slot (24).

4. Separating method according to claim 1, **characterized in that** steps a) and c) are carried out by means of step:
a2) depositing the quantity (18) of strip-shaped slot cover slides (12) on the surface (22) of the counterpart (20) in such a way that the slot cover slides (12) are aligned with their longitudinal direction with each other and with the extension of the at least one slot (24), and **in that** step d) comprises:
d2) relatively moving the quantity (18) of slot cover slides (12) aligned according to step a2) and the surface (22) in the direction transverse to the longitudinal direction of the slot cover slides (12) and the slot (24), so that the slot cover slides (12) are displaced over the region of the surface (22) provided with the slot (24).

5. Separating method according to any one of the preceding claims, **characterized in that** step b) comprises at least one or more of the following steps:
b1) providing the counterpart (20) in such a way that the surface (22) is curved or cylinder jacket-shaped, preferably with a curvature adapted to the radius of the stator (14) to be provided with slot cover slides (12);
b2) providing the counterpart (20) in such a way that the surface (22) has several slots (24) arranged next to one another, in particular in such a way that the spacing of the slots (24) corresponds to the spacing of the stator slots (16) of the stator (14) to be provided with slot cover slides (12);
b3) providing the counterpart (22) in such a way that the surface (22) is flat.

6. Separating method according to any one of the preceding claims, **characterized in that** step d) comprises at least one or more of the following steps:
d3) relatively moving the quantity (18) of slot cover slides (12) back and forth over the surface (22) and the slot (24);
d4) moving the quantity (18) of slot cover slides (12), preferably with the counterpart (20) stationary, in particular by moving the receptacle (24) or by moving a blade (44) or pusher pushing the quantity (18) of slot cover slides (12);
d5) moving the counterpart (20), preferably with the quantity (18) of slot cover slides (12) being stationary;
d6) pivoting the quantity (18) of slot cover slides (12), in particular in the receptacle (26), relative to the counterpart (22) having a curved surface;
d7) linearly moving the quantity (18) of slot cover slides, in particular in the receptacle (26), relative to the counterpart (22) having a flat surface.

7. Separating method according to any one of the preceding claims,
**characterized in that**
step e) comprises:
e1) using at least one scraper (34) to be moved over the surface (22) of the counterpart (24) in order to push the slot cover slides (12) into the slot;
e2) providing a scraper (34) on each longitudinal side of a slider or on each longitudinal side of the dispensing opening (30) of the receptacle (26), preferably in the region of each lower longitudinal edge of the receptacle (26);
e3) using a brush arrangement or brush strip for brushing-in the slot cover slides (12), in particular using the brush arrangement as a scraper (34).

8. Method to be carried out in the course of a manufacturing process for a stator (14) for inserting slot cover slides (12) into stator slots (16) for the purpose of covering conductors located therein, the method comprising:
8.1 providing an annular stator component (38) having stator slots (16) in which conductors for forming a coil winding are received,
8.2 providing separated slot cover slides (12) by carrying out the separation process according to any one of claims 1 to 7,
8.3 transferring the respective slot cover slide (12) from the at least one slot (24) in the surface (22) into the stator slot (16) to cover the conductors.

9. Method according to claim 8, **characterized in that**
step b) comprises:
b1a) providing the counterpart (20) so that the upwardly facing surface (22) is provided with a concave curvature adapted to the stator component (38) and in the concavely curved surface (22) the at least one upwardly open slot (24) extending in the axial direction and complementarily adapted to the shape of the slot cover slides (12) is provided, wherein the curvature of the surface (22) and the arrangement of the at least one slot (24) are selected such that the radial position of the at least one slot (24) corresponds to the radial position of the inserted slot cover slide (12) in a stator slot (16); and that
step 8.3 comprises:
f) aligning the at least one slot (24) in the separating tool (20) with at least one stator slot (16); and
g) displacing the respective slot cover slide (12) in the longitudinal direction out of the slot (24) of the separating tool (20) into the stator slot (16) aligned therewith.

10. Separating device (10) for carrying out the separating method according to any one of claims 1 to 7, wherein the separating device (10) comprises:
a supply device (32) for supplying a quantity of strip-shaped slot cover slides (12) such that the slot cover slides are aligned in the longitudinal direction, but are otherwise present in a disordered state as a bulk material;
a counterpart (20) with an upwardly facing surface (22) in which at least one upwardly open slot (24) is provided which is adapted to the outer contour of the slot cover slides (12) and in which a respective slot cover slide (12) can be accommodated in an aligned manner, and
a movement device (28) for relatively moving the quantity (18) of slot cover slides (12) aligned with the longitudinal direction of the slot (24) and the counterpart (20) in order to move the quantity (18) of slot cover slides (12) over the slot (24).

11. Separating device (10) according to claim 10, **characterized in** in that the supply device (32) has an elongate receptacle (26) for receiving a quantity of strip-shaped slot cover slides (12), the receptacle having an elongate dispensing opening (30), so that the slot cover slides (12) are aligned in the receptacle (26) in the longitudinal direction, but are otherwise present in a disordered state as a bulk material, wherein the at least one slot (24) is aligned with the longitudinal direction of the receptacle (26) and wherein the movement device (28) is designed to move the receptacle (30) relative to the counterpart (20) in order to move the dispensing opening (30) over the surface (22) having the slot (24).

12. Separating device (10) according to claim 11,
**characterized in that** the receptacle (30) has at least one or more of the following features:
12.1 that in the region of at least one longitudinal edge of the dispensing opening (30), preferably on both sides, at least one scraper (34) made of flexible material is arranged for inserting the slot cover slide (12) to be separated into the slot (24);
12.2 that the receptacle (30) has a rectangular, parallelogram-shaped or trapezoidal cross-section,
12.3 that brushes (36) for inserting the slot cover slide (12) to be separated into the slot (24) are arranged at both lower corner edges extending in the longitudinal direction.

13. Separating device (10) according to any one of claims 10 to 12,
**characterized in that** the counterpart (20) has at least one or more of the following features:
13.1 that the surface (22) is curved, preferably curved in arc shape, at least in regions;
13.2 that the surface (22) is at least partially flat;
13.3 that the surface (22) has several of the slots (24) which are arranged next to one another.

14. Separating device (10) according to any one of claims 10 to 13,
**characterized in that** the moving device (28)
14.1 is designed to move the quantity (18) of slot cover slides (12) or the receptacle (26);
14.2 is designed to move the counterpart (20),
14.3 is designed to pivot the quantity (18) of slot cover slides (12) or the receptacle (26) relative to the counterpart (20),
14.4 is designed to move the quantity (18) of slot cover slides (12) or the receptacle (26) linearly relative to the counterpart (20); or
14.5 has a blade (44), preferably pivotable about a pivot axis (42), or a pusher for pushing the aligned quantity (18) of slot cover slides (12) over the surface (22).

15. Use of a separating device (10) according to any one of claims 10 to 14 for manufacturing a stator (14), wherein the slot cover slide (12) arranged aligned in the slot (24) of the counterpart (20) is pushed into a stator slot (16) for covering conductors, wherein in particular the curvature of the surface (22) of the counterpart (20) is adapted to the curvature of the region of the stator (14) provided with the mouths of the stator slots (16) to be covered.

## Revendications

1. Procédé de séparation à mettre en œuvre lors de la fabrication d'un stator (14) pour séparer les coulisseaux de recouvrement d'encoches (12) destinés à recouvrir les encoches de stator (16) pourvues de conducteurs pour former un enroulement de bobine, le procédé comprenant les étapes suivantes:
a) fournir une quantité (18) de coulisseaux de recouvrement d'encoches en forme de baguettes (12) de telle sorte que les coulisseaux de recouvrement d'encoches (12) sont alignés les uns avec les autres dans la direction longitudinale, mais sont autrement présentes dans un état désordonné en tant que matériau en vrac,
b) fournir une contrepartie (20) qui a une surface orientée vers le haut (22) avec au moins une encoche ouverte vers le haut (24) adaptée de manière complémentaire à la forme des coulisseaux de recouvrement d'encoches (12),
c) disposer la quantité (18) de coulisseaux de recouvrement d'encoches (12) parallèlement à ladite au moins une encoche (24),
d) déplacer relativement la quantité (18) de coulisseaux de recouvrement d'encoches (12) et la contrepartie (20) dans une direction transversale à l'extension longitudinale de l'encoche (24) et des coulisseaux de recouvrement d'encoches (12) alignés avec elle, de sorte que la quantité (18) de coulisseaux de recouvrement d'encoches (12) soit déplacée sur la région de la surface (22) pourvue de l'encoche (24),
e) insérer un coulisseau de recouvrement d'encoche (12) dans l'encoche (24) afin d'aligner le coulisseau de recouvrement d'encoche (12) également par rapport à sa position de rotation autour de son axe longitudinal dans l'encoche (24).

2. Procédé de séparation selon la revendication 1, **caractérisé en ce que** les étapes a) et c) sont réalisées au moyen de l'étape:
a1) l'insertion d'une quantité (18) de coulisseau de recouvrement d'encoches en forme de baguette (12) dans un réceptacle allongé (26) aligné avec la direction longitudinale de l'encoche (24) de telle sorte que les coulisseau de recouvrement d'encoches (12) y sont présentes alignées dans la direction longitudinale, mais autrement présentes dans un état désordonné en tant que matériau en vrac et peuvent être distribués par une ouverture de distribution allongée (30) à l'extrémité inférieure du réceptacle (26), et **en ce que** l'étape d) comprend:
d1) le déplacement relatif du récipient (26) sur sa contrepartie (20), de sorte que le récipient (26) avec l'ouverture de distribution (30) et la région de la surface (22) pourvue de l'encoche (24) soient déplacés l'un devant l'autre par rapport à l'autre.

3. Procédé de séparation selon la revendication 2, **caractérisé en ce que** l'étape e) est réalisée à l'aide d'au moins un racleur (34) qui est déplacé dans la direction de mouvement après l'ouverture de distribution (30) sur la surface (22) et l'encoche (24) afin de pousser dans l'encoche (24) un coulisseau de recouvrement d'encoche (12) qui est distribué au niveau de l'ouverture de distribution (30) et qui repose sur la surface (22).

4. Procédé de séparation selon la revendication 1, **caractérisé en ce que** les étapes a) et c) sont réalisées au moyen de l'étape:
a2) déposer la quantité (18) de coulisseaux de recouvrement d'encoche en forme de baguette (12) sur la surface (22) de la contrepartie (20) de manière à ce que les coulisseaux de recouvrement d'encoches (12) soient alignés dans leur direction longitudinale les uns avec les autres et avec l'extension d'au moins une encoche (24), et **en ce que** l'étape d) comprend:
d2) le déplacement relatif de la quantité (18) de coulisseaux de recouvrement d'encoches (12) alignés conformément à l'étape a2) et de la surface (22) dans la direction transversale à la direction longitudinale des coulisseaux de recouvrement d'encoches (12) et de l'encoche (24), de sorte que les coulisseaux de recouvrement d'encoches (12) sont déplacés sur la zone de la surface (22) pourvue de l'encoche (24).

5. Procédé de séparation selon l'une quelconque des revendications précédentes, **caractérisé en ce que** l'étape b) comprend au moins une ou plusieurs des étapes suivantes:
b1) fournir la contrepartie (20) de telle sorte que la surface (22) soit incurvée ou en forme de chemise de cylindre, de préférence avec une courbure adaptée au rayon du stator (14) devant être pourvu de coulisseaux de recouvrement d'encoches (12);
b2) fournir la contrepartie (20) de telle sorte que la surface (22) comporte plusieurs encoches (24) disposées les unes à côté des autres, en particulier de telle sorte que l'espacement des encoches (24) corresponde à l'espacement des encoches (16) du stator (14) à équiper de coulisseaux de recouvrement d'encoches (12);
b3) fournir la contrepartie (22) de manière à ce que la surface (22) soit plate.

6. Procédé de séparation selon l'une quelconque des revendications précédentes, **caractérisé en ce que** l'étape d) comprend au moins une ou plusieurs des étapes suivantes:
d3) déplacement relatif de la quantité (18) coulisseaux de recouvrement d'encoches (12); d'avant en arrière sur la surface (22) et l'encoche (24);
d4) déplacement de la quantité (18) de coulisseaux de recouvrement d'encoches (12), de préférence avec la contrepartie (20) immobile, notamment en déplaçant le réceptacle (24) ou en déplaçant une lame (44) ou un poussoir qui pousse la quantité (18) de coulisseaux de recouvrement d'encoches (12);
d5) déplacer la contrepartie (20), de préférence avec la quantité (18) de coulisseaux de recouvrement d'encoches (12) immobile;
d6) faire pivoter la quantité (18) de coulisseaux de recouvrement d'encoches (12), en particulier dans le réceptacle (26), par rapport à la contrepartie (22) ayant une surface incurvée;
d7) déplacer linéairement la quantité (18) de coulisseaux de recouvrement d'encoches, en particulier dans le réceptacle (26), par rapport à la contrepartie (22) ayant une surface plane.

7. Procédé de séparation selon l'une quelconque des revendications précédentes, **caractérisé en ce que**
l'étape e) comprend:
e1) l'utilisation d'au moins un racleur (34) à déplacer sur la surface (22) de la contrepartie (24) afin de pousser les coulisseaux de recouvrement d'encoches (12) dans l'encoche;
e2) fournir un racleur (34) sur chaque côté longitudinal d'un coulisseau ou sur chaque côté longitudinal de l'ouverture de distribution (30) du réceptacle (26), de préférence dans la région de chaque bord longitudinal inférieur du réceptacle (26);
e3) utiliser un ensemble de brosse ou une baguette de brosse pour brosser dedans les coulisseaux de recouvrement d'encoches (12), en particulier en utilisant la brosse comme un racleur (34).

8. Procédé à mettre en oeuvre au cours d'un procédé de fabrication d'un stator (14) pour insérer des coulisseaux de recouvrement d'encoches (12) dans des encoches de stator (16) afin de recouvrir les conducteurs qui s'y trouvent, le procédé comprenant:
8.1 fournir un composant de stator annulaire (38) ayant des encoches de stator (16) dans lesquelles les conducteurs pour former un enroulement de bobine sont reçus,
8.2 fournir des coulisseaux de recouvrement d'encoches (12) séparés en mettant en œuvre le procédé de séparation selon l'une quelconque des revendications 1 à 7,
8.3 transférer le coulisseau de recouvrement d'encoche (12) respective de l'au moins une encoche (24) de la surface (22) dans l'encoche de stator (16) pour recouvrir les conducteurs.

9. Procédé selon la revendication 8, **caractérisé par** en ce que l'étape b) comprend:
b1a) fournir la contrepartie (20) de sorte que la surface orientée vers le haut (22) présente une courbure concave adaptée au composant du stator (38) et dans la surface courbée concave (22) est prévue au moins une encoche (24) ouverte vers le haut s'étendant dans la direction axiale et adaptée de manière complémentaire à la forme des coulisseaux de recouvrement d'encoches (12), dans lequel la courbure de la surface (22) et la disposition de l'au moins une encoche (24) sont choisies de telle sorte que la position radiale de l'au moins une encoche (24) corresponde à la position radiale du coulisseau de recouvrement d'encoche (12) inséré (12) dans une encoche de stator (16); et que
l'étape 8.3 comprend:
f) l'alignement d'au moins une encoche (24) dans l'outil de séparation (20) avec au moins une encoche de stator (16); et
g) déplacer le coulisseau de recouvrement d'encoche (12) dans la direction longitudinale hors de l'encoche (24) de l'outil de séparation (20) dans l'encoche de stator (16) alignée avec celle-ci.

10. Dispositif de séparation (10) pour la mise en œuvre du procédé de séparation selon l'une des revendications 1 à 7, dans lequel le dispositif de séparation (10) comprend:
un dispositif d'alimentation (32) pour fournir une quantité de coulisseaux de recouvrement d'encoches (12) en forme de baguette de telle sorte que les coulisseaux de recouvrement d'encoches sont alignées dans la direction longitudinale, mais sont autrement présentes dans un état désordonné en tant que matériau en vrac;
une contrepartie (20) avec une surface orientée vers le haut (22) dans laquelle au moins une encoche (24) ouverte vers le haut est prévue, adaptée au contour extérieur des coulisseaux de recouvrement d'encoches (12) et dans laquelle un coulisseau de recouvrement d'encoche (12) respectif peut être logé de manière alignée, et
un dispositif de mouvement (28) pour déplacer relativement la quantité (18) de coulisseaux de recouvrement d'encoches (12) alignés avec la direction longitudinale de l'encoche (24) et la contrepartie (20) afin de déplacer la quantité (18) de coulisseaux de recouvrement d'encoches (12) sur l'encoche (24).

11. Dispositif de séparation (10) selon la revendication 10, caractérisé en en ce que le dispositif d'alimentation (32) comporte un réceptacle allongé (26) destiné à recevoir une quantité de coulisseaux de recouvrement d'encoches (12) en forme de baguette, le réceptacle comportant une ouverture de distribution (30) allongée, de sorte que les coulisseaux de recouvrement d'encoches (12) sont alignés dans le réceptacle (26) dans la direction longitudinale, mais sont autrement présentes à l'état désordonné en tant que matériau en vrac, dans lequel au moins une encoche (24) est alignée sur la direction longitudinale du réceptacle (26) et dans lequel le dispositif de mouvement (28) est conçu pour déplacer l'ouverture de distribution (30) par rapport à sa contrepartie (20) afin de déplacer l'ouverture de distribution (30) sur la surface (22) comportant l'encoche (24).

12. Dispositif de séparation (10) selon la revendication 11,
**caractérisé en ce que** le réceptacle (30) présente au moins une ou plusieurs des caractéristiques suivantes:
12.1 au niveau d'au moins un bord longitudinal de l'ouverture de distribution (30), de préférence des deux côtés, au moins un racleur (34) en matériau souple est disposé pour insérer dans l'encoche (24) le coulisseau de recouvrement de l'encoche (12) à séparer;
12.2 le réceptacle (30) a une section rectangulaire, en forme de parallélogramme ou trapézoïdale,
12.3 que des brosses (36) permettant d'insérer le coulisseau de recouvrement d'encoche (12) à séparer dans l'encoche (24) sont disposées aux deux coins inférieurs s'étendant dans la direction longitudinale.

13. Dispositif de séparation (10) selon l'une quelconque des revendications 10 à 12, **caractérisé en ce que** la contrepartie (20) présente au moins une ou plusieurs des caractéristiques suivantes:
13.1 la surface (22) est incurvée, de préférence en forme d'arc, au moins dans par zones;
13.2 la surface (22) est au moins partiellement plate;
13.3 la surface (22) comporte plusieurs encoches (24) disposées les unes à côté des autres.

14. Dispositif de séparation (10) selon l'une quelconque des revendications 10 à 13, **caractérisé en ce que** le dispositif de déplacement (28)
14.1 est conçu pour déplacer la quantité (18) de coulisseaux de recouvrement d'encoches (12) ou le réceptacle (26);
14.2 est conçu pour déplacer la contrepartie (20),
14.3 est conçu pour faire pivoter la quantité (18) de coulisseaux de recouvrement d'encoches (12) ou le réceptacle (26) par rapport à la contrepartie (20),
14.4 est conçu pour déplacer linéairement la quantité (18) de coulisseaux de recouvrement d'encoches (12) ou le réceptacle (26) par rapport à la contrepartie (20); ou
14.5 comporte une lame (44), de préférence pivotante autour d'un axe de pivotement (42), ou un poussoir pour pousser la quantité alignée (18) de coulisseaux de recouvrement d'encoches (12) sur la surface (22).

15. Utilisation d'un dispositif de séparation (10) selon l'une quelconque des revendications 10 à 14 pour la fabrication d'un stator (14), dans lequel le coulisseau de recouvrement d'encoche (12) aligné dans l'encoche (24) de la contrepartie (20) est poussée dans une encoche de stator (16) pour couvrir les conducteurs, dans lequel en particulier la courbure de la surface (22) de la contrepartie (20) est adaptée à la courbure de la région du stator (14) pourvue des embouchures des encoches de stator (16) à couvrir.
